Europäisches Patentamt

European Patent Office

Office européen des brevets

(19)

(11) Veröffentlichungsnummer: **0 120 344**
**B1**

(12) # EUROPÄISCHE PATENTSCHRIFT ˙

(45) Veröffentlichungstag der Patentschrift: **28.09.88**

(51) Int. Cl.⁴: **H 04 N 5/92,** H 04 N 9/81

(21) Anmeldenummer: **84102274.2**

(22) Anmeldetag: **02.03.84**

(54) **System zur Übertragung, Aufzeichnung und/oder Wiedergabe eines Fernsehsignals.**

(30) Priorität: **25.03.83 DE 3310890**

(43) Veröffentlichungstag der Anmeldung:
**03.10.84 Patentblatt 84/40**

(45) Bekanntmachung des Hinweises auf die
Patenterteilung:
**28.09.88 Patentblatt 88/39**

(84) Benannte Vertragsstaaten:
**AT BE CH DE FR GB IT LI LU NL SE**

(56) Entgegenhaltungen:
EP-A-0 011 016
WO-A-81/03098
FR-A-2 345 872
US-A-4 015 286
US-A-4 233 627
EBU REVIEW - TECHNICAL, no. 200, August
1983, Seiten 172-185, Brüssel, BE; H. MERTENS
u.a.: "The C-MAC/packet system for direct
satellite television"

IEE PROCEEDINGS, Sektion A A I, Band 129,
Teil A, Nr. 7, September 1982, Seiten 485-492,
Old Woking, Surrey, GB; T.S. ROBSON:
"Extended-definition television service"

(73) Patentinhaber: **TELEFUNKEN Fernseh und
Rundfunk GmbH
Göttinger Chaussee 76
D-3000 Hannover 91 (DE)**

(72) Erfinder: **Scholz, Werner, Dipl.-Ing.
Osterstrasse 20
D-3007 Gehrden (DE)**

(74) Vertreter: **Einsel, Robert, Dipl.-Ing.
TELEFUNKEN Fernseh und Rundfunk GmbH
Göttinger Chaussee 76
D-3000 Hannover 91 (DE)**

(56) References cited:
IEE PROCEEDINGS, Sektion A A I, Band 129,
Teil A, Nr. 7, September 1982, Seiten 528-531,
Old Woking, Surrey, GB; M.D. WINDRAM:
"Multiple sound channels in satellite
broadcasting"

IBA EXPERIMENTAL & DEVELOPMENT
REPORT, Nr. 118, August 1982, Seiten 1-39,
Independent Broadcasting Authority,
Winchester, Hants., GB; M.D. WINDRAM u.a.:
"MAC - a television system for high-quality
stallite broadcasting"

**0 120 344**

**Beschreibung**

Bei Videorecordern nach den Systemen VHS, Betamax und V 2000 wird das Leuchtdichtesignal durch Frequenzmodulation eines Bildträgers auf Schrägspuren eines Magnetbandes aufgezeichnet. Unterhalb des Frequenzbereiches des modulierten Bildträgers wird der in der Frequenz auf etwa 0,63 MHz herabgesetzte Farbträger aufgezeichnet. Zur Verbesserung der Tonqualität ist es auch bekannt (DE—A—31 16 130), mit den Videoköpfen ein oder mehrere mit Tonsignalen frequenzmodulierte Tonträger aufzuzeichnen. Da die gesamte verfügbare Aufzeichnungsbandbreite von 6 MHz durch den Farbträger und den Bildträger voll eingenommen ist, muß für derartige Tonträger ein zusätzlicher Frequenzbereich geschaffen werden. Dazu ist es bekannt, im Frequenzbereich des modulierten Bildträgers Frequenzbereiche für den Tonträger zu unterdrücken oder das obere Seitenband des Farbträgers oder das untere Seitenband des Bildträgers einzuengen.

Die gleichen Überlegungen gelten, wenn es sich nicht um einen Videorecorder, sondern um eine Übertragungsstrecke für ein Fernsehsignal handelt, z.B. bei einer Kabelübertragung, einem Fernsehtelefon oder einer Satellitenübertragung.

Versuche haben gezeigt, daß bei Videorecordern nach der VHS-Norm anstelle des modulierten Farbträgers ein PCM-Stereosignal mit 14 Bit Quantisierung und 32 kHz-Abtastrate je Kanal übertragen werden kann, ohne daß eine unzulässige Störung des Videosignals erfolgt. Die Fehlerrate des PCM-Signales ist dabei außerordentlich gering. Diese Möglichkeit einer hochwertigen Tonübertragung kann nur ausgenutzt werden, wenn auf die Übertragung der Farbinformation verzichtet wird oder wenn es gelingt, durch bessere Ausnutzung der verfügbaren Übertragungskapazität einen neuen Farbkanal zu schaffen.

Zur Erhöhung der Übertragungskapazität ist es bekannt (Fernseh- und Kino-Technik Nr. 1/1975, Seite 5—9), die Zeilensynchronimpulse während der Bildhinlaufzeit wegzulassen, so daß die gesamte Zeilendauer für die Signalübertragung ausgenutzt werden kann. Die Zeilensynchronimpulse können bei der Wiedergabe während der Bildhinlaufzeit trotzdem wiedergewonnen werden, indem jeweils mit dem Vertikalsynchronimpuls ein Zähler gestartet wird, der jeweils nach Ablauf der durch die Norm bekannten Zeilendauer einen Zeilensynchronimpuls erzeugt. Diese Art der Signalübertragung ohne Zeilensynchronimpulse während der Bildhinlaufzeit ist aber bei einer Aufzeichnung und Wiedergabe nicht anwendbar. Des beruht darauf, daß die Signale bei der Wiedergabe zwangsläufig Zeitfehler aufweisen, so daß die mit einem Zähler aufgrund der Fernsehnorm gewonnenen Zeilensynchronimpulse diesen Zeitfehlern nicht folgen würden und eine falsche Lage hätten.

Der Erfindung liegt die Aufgabe zugrunde, ein Gerät zur Aufzeichnung und Wiedergabe eines Fernsehsignals zu schaffen, das während der Bildhinlaufzeit keine Zeilensynchronimpulse enthält.

Diese Aufgabe wird durch die im Anspruch 1 beschriebene Erfindung gelöst, Vorteilhafte Weiterbildungen der Erfindung sind in den Unteransprüchen beschrieben.

Es ist auch bei einem sogenannten Timeplex- oder MAC-Signal bekannt (WO—A—81 03 098), jeweils während einer Zeilendauer in zeitkomprimierter Form sequentiell ein Leuchtdichtesignal und ein Farbdifferenzsignal zu übertragen und beide Signale bei der Wiedergabe wieder zu expandieren. Die Übertragungskapazität wird dort auch insofern erhöht, als jeweils während einer Zeile zwei an sich von einander unabhängige Signale übertragen werden. Dabei bleiben jedoch die Zeilensynchronimpulse unverändert, so daß der für die Signalübertragung wirksame aktive Anteil der Zeilendauer nicht geändert wird.

Es ist auch bekannt (WO—A—83 00 269), zur Verlängerung des aktiven Teils der Zeilendauer den Zeilensynchronimpuls und den darauf folgenden Burst zeitlich kürzer auszubilden. Eine Anregung, den Zeilensynchronimpuls völlig wegzulassen und aus einem PCM-Signal wiederzugewinnen, ist jedoch dieser Entgegenhaltung nicht zu entnehmen.

Durch die Erfindung ergeben sich für die Aufzeichnung mehrere Signale wie z.B. des Leuchtdichtesignals und der Farbsignale folgende Vorteile:

Der Farbkanal der heutigen Videorecorder hat wegen der geringen Farbträgerfrequenz von etwa 630 kHz, der geringen Bandbreite und der notwendigen Amplitudenabsenkung verschieden Mängel hinsichtlich Störabstand und Farbtreue. Der PAL- oder NTSC-Farbträger muß im Gegensatz zu einem frequenz- oder pulsmodulierten Signal amplitudenrichtig übertragen werden. Es ist daher wesentlich vorteilhafter, wenn die Farbinformation auch über den FM-Kanal des Bildträgers übertragen wird. Der in der Frequenz herabgesetzte Farbträger kann z.B. für die Aufzeichnung vor dem FM-Modulator zum Leuchtdichtesignal addiert werden. Dann sind jedoch zur Trennung von Leuchtdichtesignal und Farbträger bei der Wiedergabe Kammfilter erforderlich, die nur beim Halbzeilenoffset, also bei NTSC, günstig ausführbar sind. Ein weiterer Nachteil derartiger Kammfilter besteht darin, daß die Vertikalauflösung des Leuchtdichtesignals verringert wird.

Eine weitere Möglichkeit, die Farbinformation mit über den FM-Kanal zu übertragen, ist durch das bekannte Timeplex- oder Lineplexverfahren gegeben, wie es im Vortrag Nr. 9 der Fernseh- und Kinotechnischen Gesellschaft in Berlin am 07.10.1980 der Öffentlichkeit vorgestellt wurde. Bei diesem Verfahren werden in den Horizontalaustastzeiten außer den zeitkomprimierten Farbsignalen noch schmale S-Impulse und Bezugspegelbereiche übertragen. Auf diese Impulse kann verzichtet werden, wenn eine Taktfrequenz zur Verfügung steht, die den gleichen Zeitschwankungen unterworfen ist wie das

2

Videosignal. Der aus dem PCM-Signal regenerierte Bit-Takt ist dafür geeignet. Die Bezugspegel für Schwarz und Unbunt können in der Vertikalaustastzeit übertragen werden.

Durch das Entfernen der S-Impulse wird nicht nur der Frequenzhub für das BA-Signal vergrößert, sondern es werden auch die Zeiten für die Übertragung des zeitlich komprimierten Farbsignals geschaffen. Für die Kompression des Farbsignals ist ein Wert von 1:5 zweckmäßig. Das Luminanzsignal braucht dann nicht komprimiert zu werden (günstig für Luminanzbandbreite und Aufwand; vgl. hierzu auch FKTG-Vortrag Nr. 9, 1980 über Timeplex). Die normgemäßen Austastzeiten sind gerade ausreichend für das 1:5 komprimierte Signal einschließlich einer Zeitreserve für die Pegelübergänge zwischen den Signalbereichen. In der Vertikalaustastzeit können die in den BA-Bereich verlegten S-Impulse übertragen werden.

Die Abtastfrequenz für den komprimierten Signalbereich kann z.B. bei ca. 9 MHz liegen. Damit die zeitliche Expansion exakt durchgeführt werden kann, ist es wichtig, daß sich die Wiedergabeschaltung nach jedem Kopfwechsel in dieses 9 MHz-Zeitraster wieder periodengenau hineinschaltet. Die Dauer einer Rasterperiode beträgt ca. 110 ns. Bei einer Signalbandbreite von 3 MHz beträgt aber die Anstiegszeit einer Impulsflanke ca. 160 ns. Das zeigt schon, daß die in der V-Austastlücke übertragenen Impulse allein nicht ausreichend sind, um eine einwandfreie und sichere Timeplex-Wiedergabe zu realisieren.

Auch für die Wiederherstellung der S-Impulse wäre es nicht tragbar, wenn die Impulslage von Teilbild zu Teilbild um 110 ns springen könnte.

In P 32 48 168 (=EP—A1—0114344) wurde erklärt, weshalb jeder Kopfwechsel einen unbestimmten Phasensprung für das Signal bedeutet. Es wurde dort auch gezeigt, wie innerhalb der Überlappungszeit mit Sicherheit die richtige Phasenzuordnung zwischen dem Signal der neuen Spur und einer noch von der alten Spur geregelten PLL-Schwingung hergestellt werden kann.

Diese Einrichtungen können auch für die sichere Erzeugung der für die Expansion des Farbsignals erforderlichen Taktfrequenzen und der S-Impulse ausgenutzt werden.

Die Erfindung wird im folgenden anhand der Zeichnung erläutert. Darin zeigen

Fig. 1 das Signal während der Vertikalaustastzeit,
Fig. 2 das Blockschaltbild einer Aufnahmeschaltung,
Fig. 3 das Blockschaltbild einer entsprechenden Wiedergabeschaltung,
Fig. 4 Ausschnitte aus der Vertikalaustastzeit,
Fig. 5 ein Zahlenbeispiel für Fig. 4,
Fig. 6 eine Schaltung für die Erzeugung von Zeilensynchronimpulsen ($H_1$, $H_2$),
Fig. 7 ein Impulsdiagramm zur Erläuterung der Wirkungsweise von Fig. 6.

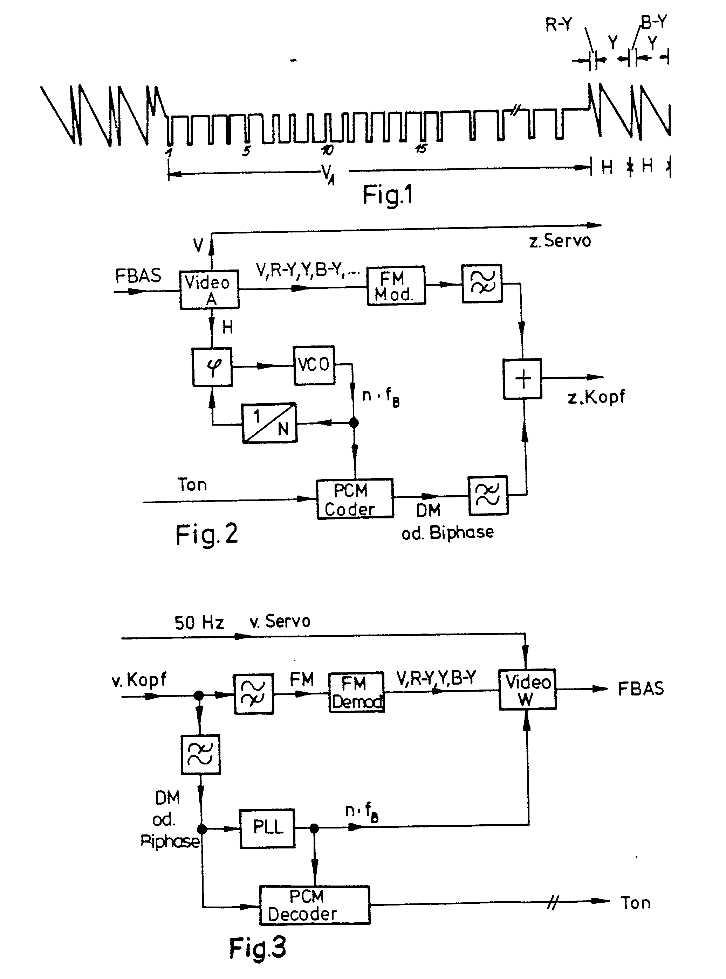

Fig. 1 zeigt das Signal im Bereich der V-Austastzeit, das bei der Aufzeichnung dem FM-Modulator zugeführt wird bzw. bei der Wiedergabe vom FM-Demodulator geliefert wird. Bei der Wiedergabe vom VTR (VTR=Video-Tape-Recorder) liegt der Zeitpunkt der Kopfumschaltung kurz vor Beginn der V-Austastzeit. Die Impulse in der V-Austastzeit geben Auskunft über die zeitliche Lage der Signale der folgenden Spur. Daß diese zeitliche Zuordnung bis zum nächsten Kopfwechsel beibehalten wird, dafür sorgt der aus dem PCM-Signal erzeugte Takt.

Auf die H-Impulse außerhalb der V-Austastzeit kann also verzichtet werden. Innerhalb der H-Austastzeiten werden dafür die zeitlich komprimierten Farbdifferenzsignale übertragen. Der untere Amplitudenwert der Impulse in der V-Zeit gibt den Schwarzpegel an, der obere Amplitudenwert den Nullpegel für die Farbdifferenzsignale.

Fig. 2 zeigt das Blockschaltbild einer Aufnahmeschaltung. Eine Empfängerschaltung liefert das FBAS- und das Tonsignal. Die Video-Aufnahmeschaltung erzeugt das in Fig. 1 dargestellte Videosignal und liefert es an den FM-Modulator. Die zeitliche Kompression der Farbdifferenzsignale wird mit Hilfe getakteter Speicher durchgeführt. Die Impulsabtrennung erzeugt das V-Signal für die Servoschaltung der Aufzeichnungsmaschine und das H-Signal für eine PLL, die die N-fache H-Frequenz erzeugt. Dies ist gleichzeitig der n-fache Bittakt. Wenn z.B. N ungerade und n=4 ist, dann liegen die Pegelübergänge des PCM-Signals in einem Viertelzeilen-Offset. Der PCM-Coder liefert z.B. ein DM- oder Biphase-Signal, das die Toninformation enthält. Das Spektrum des PCM-Signals wird mit einem Impulsfilter so begrenzt, daß die Video-Information nicht gestört wird. FM-Signal und PCM-Signal werden dann zusammen den Aufzeichnungsköpfen zugeführt. Das PCM-Signal nimmt etwa den Frequenzbereich ein, in dem bei den heutigen VTR-Geräten das Farbträgersignal übertragen wird. Im Gegensatz zum Farbträgersignal braucht das PCM-Signal nicht amplitudengenau übertragen zu werden. Es kommt hier nur auf die Lage der Pegelübergänge an.

Fig. 3 zeigt das Blockschaltbild einer Wiedergabeschaltung. Mit Hilfe einer Frequenzweiche werden FM-Signal und PCM-Signal getrennt. Der FM-Demodulator liefert ein Signal gemäß Fig. 1 an die Video-Wiedergabeschaltung.

Eine PLL-Schaltung erzeugt aus dem PCM-Übertragungssignal die n-fache Bitfrequenz. Diese Schwingung folgt den Zeitschwankungen des abgetasteten Signals. Sie dient sowohl zur PCM-Decodierung als auch zur Signalverarbeitung in der Video-Wiedergabeschaltung und zur Wiederherstellung der nicht mitübertragenen S-Impulse. Dabei erfolgt die Einstellung der Grundphase jeweils durch die in der V-Austastzeit übertragenen Impulse. Diese Impulse dienen zur Phaseneinstellung von Zählschaltungen, die dann dann bis zum nächsten Kopfwechsel die S-Impulse und die Taktfrequenzen

0 120 344

für die Farbsignal-Expansion liefern. Der eigentlichen Wiedergabeeinrichtung können dann die einzelnen Signalkomponenten getrennt oder als FBAS-Signal zugeführt werden.

Ein geeignetes Verfahren für PCM-Übertragung bei VTR-Geräten ist in der älteren Patentanmeldung EP—A—0 114 344 beschrieben.

Die Zeitkompression der Farbsignale erfolgt durch Abtasten der Farbsignale und Einlesen der analogen oder digital codierten Abtastwerte in einem Speicher. Während der H-Austastzeit werden die Abtastwerte mit 5-facher Frequenz wieder aus dem Speicher ausgelesen. Bei der Zeitexpansion wird dieser Vorgang durch Abtasten mit fünffacher Frequenz, Zwischenspeichern und Auslesen mit der ursprünglichen Abtastfrequenz wieder rückgängig gemacht.

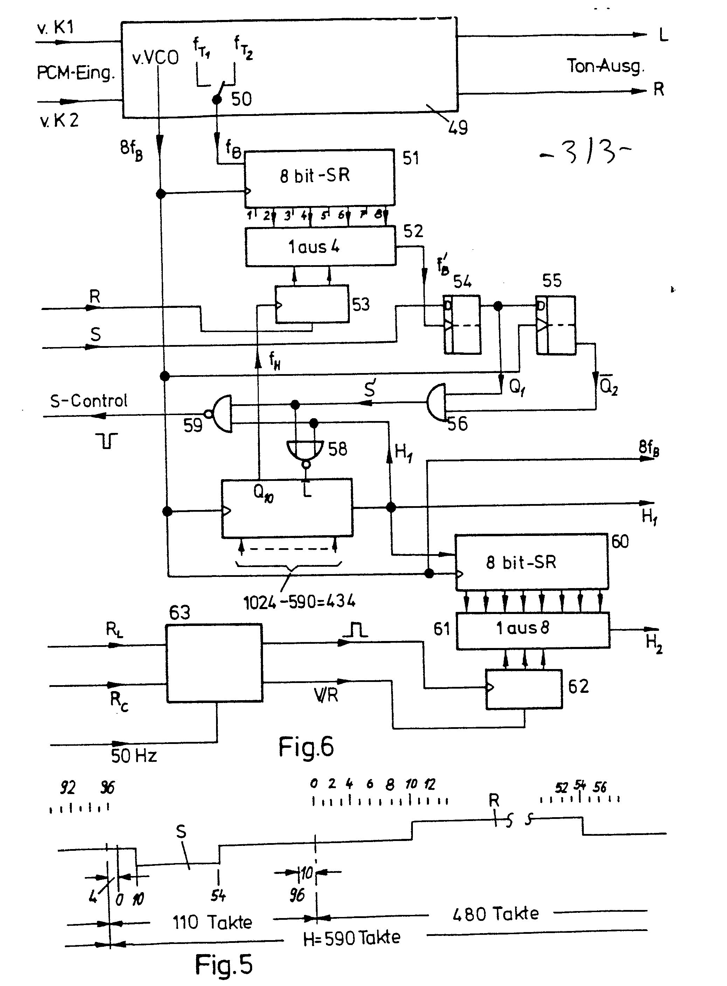

Für Fig. 5 gilt das folgende Zahlenbeispiel:

| | |
|---|---|
| Zeilenfrequenz | $f_H = 15625$ Hz |
| PCM-Bitrate | $f_B = \dfrac{295}{4} \cdot f_H = 1/4 \cdot 4{,}609375$ MHz |
| Timeplex-Abtastfrequenz | $8 \cdot f_B = 590 \cdot f_H = 9{,}218750$ MHz bzw. $8/5 \cdot f_B$ |
| PCM-Abtastfrequenz | $\dfrac{f_B}{36} = \dfrac{4609375}{144} \cong 32{,}01$ kHz |

Es soll nun das Ausführungsbeispiel erläutert werden: Die PCM-Bitrate ist hier das 73,75-fache der Zeilenfrequenz. Die Timeplex-Abtastfrequenz ist das 8-fache bzw. 8/5 der Bitrate.

Die PCM-Abtastfrequenz weicht um 0,3% von 32 kHz ab. Diese Abweichung ist so gering, daß z.B. bei der Wiedergabe wahlweise die Videofrequenz oder die PCM-Frequenz auf den Normwert gelegt werden kann.

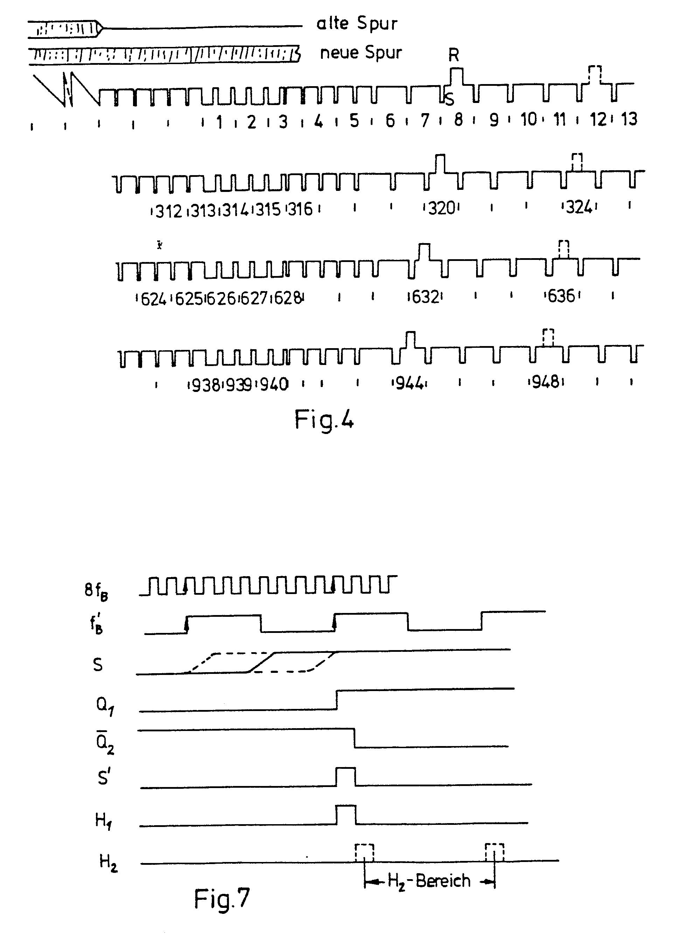

In Fig. 4 sind Ausschnitte der V-Austastzeit von 4 aufeinanderfolgenden Teilbildern dargestellt. Die Überlappungszeit der abgetasteten Signale endet etwa zu Beginn der V-Austastzeit (s. Fig. 4 oben). Zu diesem Zeitpunkt ist also auf jeden Fall die Phasenanpassung des PCM-Signals der neuen Spur an die PLL-Schwingung vollzogen (vgl. ältere Patentanmeldung P 32 48 168). Die gesamte V-Austastzeit (25 H-Perioden) steht also zur Verfügung, um die Timeplextakt- und die S-Impuls-Erzeugung periodengenau in das durch die 8-fache Bitrate (9,22 MHz) gegebene Zeitraster einzuordnen.

Wie aus Fig. 4 ersichtlich, werden in einigen Leerzeilen positive Impulse R übertragen. Ein derartiger Impuls sagt z.B. aus, daß die Vorderflanke des nachfolgenden S-Impulses mit dem Beginn einer Bitperiode des PCM-Signals übereinstimmt. Wegen des Faktors 73, 75 zwischen Bittakt und Zeilenfrequenz ist dies nur bei jedem 4. H-Impuls der Fall. Der R-Impuls soll in jeder V-Austastlücke mindestens einmal vorhanden sein. Er kann aber auch in den 17 verfügbaren Leerzeilen bis zu 4 mal übertragen werden.

Dieser R-Impuls übt hier mehrere Funktionen aus:

1. Er überwacht in der Takterzeugungsschaltung die Zählphase eines bis-4-Zählers für die Zeilenfrequenz. Falls die Zählphase nicht korrekt ist, erfolgt Rückstellung durch den R-Impuls und damit Richtigstellung der Zählphase.

2. Der Impuls kennzeichnet die Phase der R—Y, B—Y-Sequenz.

3. Der Impuls stellt den vorschriftsmäßig expandierten invertierten S-Impuls dar (s. Fig. 5). Der Impuls bietet dann die Möglichkeit, die richtige Einstellung der Timeplex-Wiedergabeschaltung zu kontrollieren. Bei einer Normung der Zählvorschriften für die Aufnahme muß die einmal richtig eingestellte Timeplex-Wiedergabeschaltung für alle denkbaren Abspielungen von vornherein korrekt arbeiten. Es wäre aber auch denkbar, daß unterschiedliche Aufnahmeschaltungen mit unterschiedlichen Zählphasen arbeiten. In der Wiedergabeschaltung müßte dann die Zählphase der jeweiligen Aufnahme automatisch angepaßt werden. Das könnte dadurch geschehen, daß der für die Timeplex-Takterzeugung maßgebliche Impuls in der Wiedergabeschaltung von den Abgriffen eines Schieberegisters abgenommen wird, das mit der Frqeuenz $8 \cdot f_B$ getaktet ist. Aufgrund eines Vergleichs des expandierten S-Impulses mit dem R-Impuls kann z.B. die Wahl des Schieberegisterabgriffes automatisch erfolgen. Damit ist in jedem Fall die korrekte Einstelluny des Timeplex-Decoders sichergestellt.

Punkt 1 dieser Aufzählung erübrigt sich, wenn der Faktor zwischen Bittakt und Zeilenfrequenz ganzzahlig ist. In diesem Fall wird dann der R-Impuls nur in geradzahligen bzw ungeradzahligen Leerzeilen übertragen, sofern er gleichzeitig die Aufgabe gemäß Punkt 2 erfüllen soll. Anderenfalls kann der R-Impuls in beliebigen Leerzeilen übertragen werden.

Fig. 5 zeigt ein Beispiel für die Zählvorschrift bei der Timeplex-Codierung. Je nach Schaltungskonzept kann auch eine andere Zählvorschrift günstiger sein. Wenn es z.B. auf eine billige Wiedergabeschaltung ankommt, wird man das komprimierte Signal möglichst früh übertragen, um damit den Laufzeitausgleich für das Luminanzsignal einzusparen. Im Beispiel Fig. 5 wird die Kompression bzw. Expansion mit 97 Abtastwerten 0...96 durchgeführt. Bei Verwendung getakteter Analogspeicher (Eimerkette, CCD) müßten

4

diese 97 Stufen besitzen. Für die Übergänge zwischen den Signalbereichen stehen 4 bzw. 10 Taktperioden zur Verfügung.

Das in Fig. 5 dargestellte Signal besteht aus einem S-Impuls und dem daraus durch Expansion und Invertierung gebildeten R-Impuls. Beide Impulse können auch mit Hilfe von Zählschaltungen erzeugt werden, besonders dann, wenn die S-Impulse sowieso mit Zählschaltungen bei der Timeplex-Codierung regeneriert werden.

Anhand von Fig. 6 und 7 wird nun erläutert, wie aus dem im PCM-Decoder gewonnenen Bittakt $f_B$ und den in der Vertikal-Austastlücke übertragenen Impulsen S und R eine horizontalfrequente Zeitmarke ($H_1$, $H_2$) erzeugt werden kann. Diese Zeitmarke ist sowohl für die Wiederherstellung der S-Impulse während der Bildhinlaufzeit als auch für die Einstellung der Zählschaltungen zur Timeplex-Decodierung erforderlich.

Der PCM-Decoder 49 entspricht z.B. der in EP—A—0 114 344, Fig. 9 beschriebenen Ausführung.

Der PCM-Decoder erhält von den beiden Videoköpfen K1 und K2 abwechselnd das PCM-Signal, dessen Bittakt gemäß dem zu Fig. 5 angegebenen Zahlenbeispiel mit dem Videosignal verkoppelt ist. Der VCO in der PLL-Schaltung für die Regenerierung des Bittaktes schwingt hier mit der 8-fachen Bitrate. $f_{T1}$ und $f_{T2}$ sind die den Signalen der beiden Köpfe zugeordneten Bittakte. Über einen Umschalter 50 wird der jeweils aktuelle Bittakt $f_B$ der Videosignalverarbeitungsschaltung zugeführt. Außerdem wird die Ausgangsspannung des VCO ($8 \cdot f_B$) für die Videosignalverarbeitung benötigt. Da der Bittakt $f_B$ in dem hier angegebenen Beispiel sich von Zeilenperiode zu Zeilenperiode um jeweils 1/4 $f_B$-Periode gegenüber der H-Periode verschiebt, muß zuerst ein Signal $f_B'$ erzeugt werden, das stets die gleiche Phase in Bezug auf die H-Periode des Videosignals hat. Zu diesem Zweck wird hier das Signal $f_B$ einem mit $8 \cdot f_B$ getakteten 8-Bit-Schieberegister 51 zugeführt. An den Ausgängen 2,4,6,8 dieses Schieberegisters steht dann $f_B$ mit vier gleichmäßig über eine $f_B$-Periode verteilten Phasen zur Verfügung. Mit Hilfe der Auswahlschaltung 52 wird jeweils eins der Signale ($f_B'$) abgegriffen. Die Auswahlschaltung wird mit Hilfe eines 2-bit-Zählers 53, der mit $f_H$ getaktet ist, weitergeschaltet. Mit Hilfe des Impulses R kann die Schaltphase des 2-Bit-Zählers kontrolliert werden.

Die mit Hilfe der Schaltungsteile 51 bis 53 durchgeführten Maßnahmen erübrigen sich, wenn $f_B$ ein ganzzahliges Vielfaches der Zeilenfrequenz ist. Dann ist $f_B' = f_B \cdot f_B'$ hat also eine definierte Phase in Bezug auf die H-Periode des Videosignals. Nach jeder Kopfumschaltung, die jeweils kurz vor der Vertikalaustastzeit erfolgt, muß durch die in der Vertikalaustastzeit übertragenen Impulse des Videosignals ein Zähler 57, der zwecks Erzeugung der horizontalfrequenten Zeitmarke $H_1$, $H_2$ die Perioden von $8 \cdot f_B$ zählt, periodengenau synchronisiert werden. Die Problematik dieser Aufgabe wird durch Zeile 1 und 3 der Fig. 7 veranschaulicht: Da die Impulse des Videosignals eine Anstiegszeit besitzen, die der Dauer von ein bis zwei Perioden der Frequenz $8 \cdot f_B$ entspricht, kann kaum entschieden werden, welche $8 \cdot f_B$-Periode einer Synchronimpulsflanke zuzuordnen ist. Benutzt man dagegen $f_B'$ für die nach jeder Kopfumschaltung erforderliche Phaseneinstellung des Zählers 57, dann kann die S-Impulsflanke durch Flankenrauschen oder andere Störungen in dem durch gestrichelte Linien in Fig. 7, Zeile 3 angegebenen Bereich schwanken, ohne daß eine falsche Phaseneinstellung hervorgerufen wird.

Der Zähler 57 ist so aufgebaut, daß er nach jeweils 1023 Zählperioden einen Impuls $H_1$ mit der Dauer einer Zählperiode abgibt. Dieser Impuls bewirkt, daß die 1024. Zählperiode den Zähler auf den Wert 434 voreinstellt. Dadurch zählt der Zähler zwischen zwei $H_1$-Impulsen jeweils 1024−434=590 Perioden der Frequenz $8 \cdot f_B$ (vgl. Zahlenbeispiel Fig. 5).

Über das Gatter 58 kann der Zähler auch durch einen externen Impuls S' auf den Wert 434 eingestellt und damit synchronisiert werden. Der Impuls S' wird mit Hilfe der beiden D-Flip-Flops 54, 55 und des Gatters 56 erzeugt. Er hat ebenfalls die Dauer einer Zählperiode. Die S-Flanke des Videosignals bewirkt also lediglich eine Grobeinstellung, indem sie die richtige $f_B'$-Periode auswählt. Die "Phasenfeineinstellung" des Impulses S' erfolgt dagegen durch $f_B'$, d.h. durch die Taktphase des PCM-Signals.

Von Gatter 59 wird ein negativer Impuls abgegeben, sobald ein aus S erzeugter Impuls S' mit dem Ausgangsimpuls $H_1$ des Zählers 57 zusammenfällt. Sobald dieser negative Impuls auftritt, wird zweckmäßigerweise der S-Impuls dem D-Eingang des Flip-Flops 54 nicht mehr zugeführt. Die Zuführung erfolgt erst wieder nach dem nächsten Kopfwechsel.

Sofern alle Zählvorschriften und Signallaufzeiten für die PCM- und Timeplex-Signalverarbeitung sowohl auf der Aufzeichnungs- als auch auf der Wiedergabeseite genau festgelegt sind und eingehalten werden, kann $H_1$ als Zeitmarke für die Videosignalverarbeitung in der Wiedergabeschaltung verwendet werden. Besonders die genaue Einhaltung der Signallaufzeiten wird in der Praxis Schwierigkeiten bereiten. Deshalb empfiehlt es sich, mit Hilfe der Schaltungsteile 60...63 eine Zeitmarke $H_2$ zu erzeugen, deren Lage überwacht und ggf. automatisch korrigiert wird. Dieses wird ermöglicht durch den in der Vertikalaustastlücke übertragenen Impuls R. Dieser Impuls R stellt für den Timeplex-Decoder ein Luminanzsignal dar, da er im Zeitbereich des Luminanzsignals übertragen wird. Der im Zeitbereich des Chrominanzsignals übertragene zugehörige Synchronimpuls stellt das zugehörige Chrominanzsignal dar. Nach der Timeplexsignalverarbeitung, und zwar genau an der Stelle, wo das Luminanzsignal und das Chrominanzsignal zwecks Bildwiedergabe zusammengesetzt werden, können die aus R entstandenen Signalanteile $R_L$ und die aus S entstandenen Signalanteile $R_C$ aus dem Luminanz- bzw. Chroma-Signal abgegriffen und zwecks Korrektur der Zeitmarke $H_2$ verglichen werden.

In Fig. 6 werden $R_L$ und $R_C$ einem Vergleicher 63 zugeführt, der im Zeitbereich von $R_L$ und $R_C$ aufgetastet wird. Sobald die zeitliche Abweichung zwischen beiden Signalen einen vorgegebenen Wert

# 0 120 344

(z.B. Dauer einer $8 \cdot f_B$-Periode) überschreitet, wird ein Zählimpuls auf einen Vor/Rück-Zähler 62 gegeben. Gleichzeitig wird die Zählrichtung des Zählers so eingestellt, daß der Abweichung zwischen $R_L$ und $R_C$ entgegengewirkt wird. Diese Korrektur erfolgt durch eine entsprechende Verschiebung der Zeitmarke $H_2$, die für den Start der Zählschaltungen in der Timeplexwiedergabeschaltung maßgeblich ist. Die Zeitmarke ist hierzu von den Ausgängen eines 8-bit-Schieberegisters 60 mit 8 gleichmäßig über eine $f_B$-Periode verteilten Phasen abgreifbar. Der Abgriff erfolgt über die Auswahlschaltung 62, die durch den Vor/Rück-Zähler 62 eingestellt wird.

Bei Verwendung der soeben beschriebenen Schaltungsvariante braucht der Zähler 53 nicht durch den R-Impuls in eine definierte Schaltphase gebracht zu werden. Da die Folge der $f_H$-Impulse, die dem Zähler 53 zugeführt werden, vollständig ist, bleibt eine einmal eingestellte Phase von $f_B'$ in Bezug auf die H-Periode erhalten. Die Zeitmarke $H_1$ ist dann zwar nicht mehr genau definiert, jedoch wird die Lage der verwendeten Zeitmarke $H_2$ automatisch durch die Schaltungsteile 60...63 optimal eingestellt.

Die Übertragung und die Auswertung der Impulse R und S ist natürlich auch dann vorteilhaft, wenn kein mit dem Timeplexsignal verkoppeltes Taktsignal zur Verfügung steht. In diesem Fall muß das Timeplexsignal ein horizontalfrequentes Signal enthalten, das nach Abtrennung zur Erzeugung der Timeplex-Abtastfrequenzen $8 \cdot f_B$ und $8/5 \cdot f_B$ und der Zeitmarke $H_1$ bzw. $H_2$ verwendet wird. Auch hier kann durch Vergleich der Signale $R_L$ und $R_C$ die automatische Einstellung der Zeitmarke $H_2$ erfolgen.

## Patentansprüche

1. Gerät zur Aufzeichnung und Wiedergabe eines Fernsehsignals, das während der Bildhinlaufzeit keine Zeilensynchronimpulse enthält, dadurch gekennzeichnet, daß zusammen mit dem Fernsehsignal ein PCM-Signal aufgezeichnet wird, dessen Bit-Takt mit der Zeilenfrequenz verkoppelt ist, und daß bei der Wiedergabe der regenerierte Bit-Takt als Taktsignal für die Wiederherstellung der Zeilensynchronimpulse (H1, H2) während der Bildhinlaufzeit dient.

2. Gerät nach Anspruch 1, dadurch gekennzeichnet, daß das PCM-Signal die Toninformation des Fernsehsignals enthält.

3. Gerät nach Anspruch 1, dadurch gekennzeichnet, daß das Bildsignal ein Timeplexsignal oder eine Timeplex entsprechende Signalvariante ist.

4. Gerät nach Anspruch 1 oder 3, dadurch gekennzeichnet, daß während der Vertikalaustastzeit Synchronimpulse (S) im Amplitudenbereich des BA-Signals übertragen werden.

5. Gerät nach Anspruch 4, dadurch gekennzeichnet, daß die beiden Amplitudenwerte der Synchronimpulse dem Schwarzwert und dem Nullpegel der Farbdifferenzsignale entsprechen.

6. Gerät nach Anspruch 2, dadurch gekennzeichnet, daß das Bildsignal durch FM eines Bildträgers und das PCM-Tonsignal mit einem selbsttaktenden Übertragungscode (Biphase, DM) unterhalb des vom Bildträger eingenommenen Frequenzbereiches übertragen wird.

7. Gerät nach Anspruch 3, dadurch gekennzeichnet, daß die für die zeitliche Expansion der Farbdifferenzsignale bei der Wiedergabe erforderlichen Impulse aus dem Taktsignal und aus den in der Vertikalaustastzeit übertragenen Impulsen (S, R) abgeleitet werden.

8. Gerät nach Anspruch 3, dadurch gekennzeichnet, daß das Signal Impulse (R, S) enthält, die eine automatische Phaseneinstellung zwischen Luminanzsignal und Chrominanzsignal in der Wiedergabeschaltung ermöglichen.

9. Gerät nach Anspruch 8, dadurch gekennzeichnet, daß während der Leerzeilen in der Vertikalaustastlücke ein aus dem Zeitbereich der Chrominanzübertragung (H-Austastlücke) in den Zeitbereich der Luminanzübertragung projizierter Impuls (R) dem Timeplexsignal zugefügt ist.

10. Gerät nach Anspruch 9 dadurch gekennzeichnet, daß in der Wiedergabeschaltung der im Zeitbereich der Chrominanzübertragung übertragene Impuls (S) wie ein Chrominanzsignal verarbeitet wird und der im Zeitbereich der Luminanzübertragung übertragene Impuls (R) wie das Luminanzsignal verarbeitet wird, daß beide Impulse nach, der Verarbeitung miteinander verglichen werden und aufgrund des Vergleichsergebnisses eine Einstellung der Wiedergabeschaltung erfolgt.

## Revendications

1. Appareil pour l'enregistrement et la reproduction d'un signal de télévision qui ne contient aucune impulsion de synchronisation de ligne pendant la durée de déplacement aller du spot, caractérisé en ce qu'un signal MIC, dont la cadence binaire est accouplée à la fréquence de lignes, est enregistré conjointement avec le signal de télévision et que, lors de la reproduction, la cadence binaire régénérée est utilisée comme signal de cadence pour le rétablissement des impulsions de synchronisation de ligne (H1, H2), pendant la durée de déplacement aller du spot.

2. Appareil selon la revendication 1, caractérisé en ce que le signal MIC contient l'information son du signal de télévision.

3. Appareil selon la revendication 1, caractérisé en ce que le signal d'image est un signal Timeplex, ou une variante de signal correspondant au Timeplex.

4. Appareil selon la revendication 1 ou 3, caractérisé en ce que des impulsions de synchronisation (S)

6

dans la gamme d'amplitudes du signal complexe vidéo sont transmisses pendant la durée de suppression verticale.

5. Appareil selon la revendication 4, caractérisé en ce que les deux valeurs d'amplitude des impulsions de synchronisation correspondent à la valeur du noir et au niveau nul des signaux de différence de couleurs.

6. Appareil selon la revendication 2, caractérisé en ce que le signal d'image est transmis par modulation de fréquence d'une porteuse image et le signal son MIC est transmis avec un code de transmission (biphasé, DM) fournissant un cadencement automatique, au-dessous de la plage des fréquences occupée par la porteuse image.

7. Appareil selon la revendication 3, caractérisé en ce que les impulsions nécessaires pour la dilatation temporelle des signaux de différence de couleurs lors de la reproduction sont dérivées du signal de cadence et des impulsions (S, R) transmises pendant la durée de suppression verticale.

8. Appareil selon la revendication 3, caractérisé en ce que le signal contient des impulsions (R, S), qui permettent un réglage automatique de phase entre le signal de luminance et le signal de chrominance dans le circuit de reproduction.

9. Appareil selon la revendication 8, caractérisé en ce que pendant les lignes vides dans l'intervalle de suppression vertical, une impulsion (R) projetée depuis la plage temporelle de la transmission du signal de chrominance (intervalle de suppression H) dans la plage temporelle de la transmission du signal de luminance, est adjointe au signal Timeplex.

10. Appareil selon la revendication 9, caractérisé en ce que dans le circuit de reproduction l'impulsion (S) transmise dans la plage temporelle de la transmission du signal de chrominance est traitée à la manière d'un signal de chrominance, et l'impulsion (R) transmise dans la plage temporelle de la transmission du signal de luminance est traitée en tant que signal de luminance, que ces deux impulsions sont comparées entre elles après le traitement et qu'un réglage du circuit de reproduction est réalisé sur la base du résultat de la comparaison.

**Claims**

1. A device for recording and playing back a television signal which does not contain any line synchronising pulses during the image sweep characterised in that together with the television signal a PCM signal is recorded, the bit clock of which is coupled with the line frequency, and that during play back the regenerated bit clock serves as the clock signal for recreating the line synchronising pulses (H1, H2) during the image sweep.

2. A device according to claim 1, characterised in that the PCM signal contains the sound information of the television signal.

3. A device according to claim 1, characterised in that the image signal is a timeplex signal or a signal variant which corresponds to timeplex.

4. A device according to claim 1 or 3, characterised in that, during the vertical blanking time, synchronising pulses (S) are transmitted in the amplitude range of the picture and blanking signal.

5. A device according to claim 4, characterised in that the two amplitude values of the synchronising pulses correspond to the black value and the zero level of the color difference signals.

6. A device according to claim 2, characterised in that the image signal is transmitted by FM of an image carrier and the PCM sound signal is transmitted with a self clocking transmission code (biphase, DM) below the frequency range taken up by the image carrier.

7. A device according to claim 3, characterised in that the pulses which are required for the time expansion of the colour difference signals during playback are derived from the clock signal and from the pulses (S, R) transmitted in the vertical blanking time.

8. A device according to claim 3, characterised in that the signal contains pulses (R, S) which makes possible automatic phase adjustment between the luminance signal and the chrominance signal in the playback circuit.

9. A device according to claim 8, characterised in that, during the empty lines in the vertical blanking gap, a pulse (R) which is projected out of the time range of the chrominance transmission (H blanking gap) into the time range of the luminance transmission is added to the timeplex signal.

10. A device according to claim 9, characterised in that, in the playback circuit, the pulse (S) which is transmitted in the time range of the chrominance transmission is processed as a chrominance signal and the pulse (R) which is transmitted in the time range of the luminance transmission is processed as the luminance signal, that both pulses are compared after processing and an adjustment of the playback circuit is made based on the result of the comparison.

Fig.1

Fig.2

Fig.3

alte Spur

neue Spur

R

S

1 2 3 4 5 6 7 8 9 10 11 12 13

312 313 314 315 316 320 324

624 625 626 627 628 632 636

938 939 940 944 948

Fig.4

$8f_B$

$f'_B$

S

$Q_1$

$\bar{Q}_2$

$S'$

$H_1$

$H_2$

$H_2$-Bereich

Fig.7

2

Fig.6

Fig.5